# EUROPÄISCHE PATENTSCHRIFT

(11) **EP 1 557 318 B1**
(45) Veröffentlichungstag und Bekanntmachung des Hinweises auf die Patenterteilung: **20.04.2011**
(21) Anmeldenummer: 05001254.1
(22) Anmeldetag: 21.01.2005
(51) Int. Cl.: B60P 1/00, B60P 1/02

(54) **LKW für den Transport einer grossen Anzahl von Containern**
Truck for the transport of a large number of containers
Camion pour le transport d'un grand nombre de conteneurs

(30) Priorität: 23.01.2004 DE 102004003795; 11.05.2004 DE 102004023693
(43) Veröffentlichungstag der Anmeldung: 27.07.2005
(73) Patentinhaber: Stange, Ulrich, 41812 Erkelenz (DE)
(72) Erfinder: Stange, Ulrich, 41812 Erkelenz (DE); Maschio, Pietro, 20056 Grezzago (IT)
(74) Vertreter: Castell, Klaus

(56) Entgegenhaltungen:
- EP-A- 1 380 457
- DE-A1- 3 704 612
- DE-A1- 4 037 191
- DE-U1- 9 408 263
- DE-U1- 20 220 225

## Beschreibung

Die Erfindung betrifft einen Lastkraftwagen mit einem Zugfahrzeug und einem Anhänger mit Rädern und einem Laderaum.

Derartige Lastkraftwagen bestehen in der Regel aus einem Zugfahrzeug und einem Anhänger. Der Laderaum ist hierbei auf das Zugfahrzeug und den Anhänger verteilt. Die Erfindung betrifft jedoch auch Sattelschlepper, bei denen der Anhänger den gesamten Laderaum aufweist, wie zum Beispiel in der US 4,690,609 offenbart.

In der Regel befinden sich unter dem Laderaum die Räder. Die Räder können jedoch auch in einer Ausnehmung untergebracht sein, die in den Laderaum hineinragt.

Lastkraftwagen der eingangs genannten Art müssen je nach Einsatzgebiet entweder besonders große Volumina oder besonders große Gewichte aufnehmen. Die Erfindung betrifft insbesondere Lastkraftwagen für besonders große Volumina. Hierunter ist beispielsweise der Transport von leeren IBC-Containern zu nennen, die vom Einsatzort wie beispielsweise der Chemieindustrie zum Hersteller zurück transportiert werden müssen.

Der Erfindung liegt die Aufgabe zu Grunde, mit einem Lastkraftwagen eine möglichst große Menge an voluminösen Elementen wie beispielsweise IBC-Containern zu transportieren.

Diese Aufgabe wird von einem Lastkraftwagen mit einem Zugfahrzeug und einem Anhänger gemäß Anspruch 1 gelöst.

Während alle angebotenen LKWs nur weniger als 60 derartiger Elemente transportieren können, liegt der Erfindung die Aufgabe zu Grunde, bekannte Lastkraftwagen derart weiter zu entwickeln, dass eine besonders große Menge dieser Elemente transportiert werden kann. Hierbei sind die im Straßenverkehr vorgegebenen Richtlinien einzuhalten und der LKW sollte auf einfache Art und Weise be- und entladen werden können.

Erfindungsgemäß hat sich herausgestellt, dass es verschiedene Wege gibt, derartige Kraftfahrzeuge herzustellen und hierbei sogar den gesetzlichen Anforderungen genüge getan werden kann.

Eine realistische transportierbare Menge an derartigen Elementen oder IBC-Containern liegt bei etwa 70 Containern, und die Erhöhung des Transportvolumens ermöglicht größere Einsparungen in der Logistik. Jeder zusätzliche auf einer Fahrt transportierte Container reduziert die Transportkosten, indem die Anzahl der notwendigen Fahrten verringert wird.

Um den straßenverkehrsrechtlichen Forderungen in Deutschland zu genügen, wird vorgeschlagen, dass die äußere Höhe des Anhängers von der Unterseite der Räder bis zur Oberseite des Laderaums gemessen etwa 4 m, nicht überschreitet. Die Beschränkung der Höhe ist auch in vielen Fällen notwendig, um Unterführungen wie beispielsweise Brücken passieren zu können.

Bei einem Auflieger nimmt der Anhänger das gesamte Laderaumvolumen auf und das Zugfahrzeug ist auswechselbar. Der Auflieger kann somit zum Be- oder Entladen abgestellt werden, während das Zugfahrzeug weitere Aufgaben übernimmt. Ein derartiger Auflieger kann auch als Lager dienen. In diesem Fall wird der Auflieger über einen längeren Zeitraum jeweils beim Anfall leerer IBC-Container befüllt und erst dann mit einem Zugfahrzeug abgeholt, wenn er vollständig gefüllt ist.

Da die Bauhöhe des Lastkraftwagens in der Regel beschränkt ist, ist es sinnvoll zum Erzielen eines großen Laderaumvolumens, dass der Laderaum eine Ausnehmung zur Aufnahme von Rändern aufweist. Dadurch ist im Bereich der Räder die innere Laderaumhöhe gegenüber dem übrigen Laderaum reduziert. Es kann jedoch im übrigen Laderaumbereich die maximale Höhe ausgenutzt werden.

Um möglichst viel Laderaumvolumen zu erzielen, wird vorgeschlagen, dass die Ausnehmung in Fahrtrichtung eine Länge von 1,30 m, vorzugsweise 1,10 m nicht überschreitet. Eine derartige Ausnehmung erlaubt es, einen ausreichend stabilen Reifen in der Ausnehmung anzuordnen, und ermöglicht es, oberhalb der Ausnehmung im Laderaum ein Element wie beispielsweise einen IBC-Container oberhalb des Rades zu positionieren. Dies führt zu einer optimalen Ausnutzung des zur Verfügung stehenden Laderaumvolumens.

Der Anhänger weist in Fahrtrichtung vor der Ausnehmung auf einer Länge von mindestens 6 m, vorzugsweise mindestens 7 m, eine innere Laderaumhöhe von über 3,51 m auf. Diese Fläche zwischen der Ausnehmung für die Räder und dem Zugfahrzeug sollte möglichst lang mit einer Laderaumhöhe ausgebildet sein, die es ermöglicht drei Elemente wie beispielsweise IBC-Containern, übereinander im Laderaum zu stapeln. Da in Fahrtrichtung jeweils zwei Container nebeneinander angeordnet werden können, bietet der Laderaum in diesem Bereich bei einer Stapelung von drei Containern übereinander Raum für 6 IBC-Container je Meter Fahrzeuglänge. Der Anhänger weist in Fahrrichtung hinter der Ausnehmung auf einer Länge von mindestens zwei Metern eine innere Laderaumhöhe von über 3,51 m auf. Dies ermöglicht es auch hinter der Ausnehmung für die Räder nochmals zwei Reihen mit jeweils 6 Containern, das heißt 12 Containern zu laden.

Um die Elemente schnell und einfach im Laderaum anordnen zu können, wird vorgeschlagen, dass der Laderaum zumindest des Anhängers in Fahrtrichtung von der Seite beladbar ist. Hierzu kann beispielsweise eine Folie die Seitenwände des Fahrzeugs bilden. Diese Folie kann beim Be- und Entladen zur Seite oder nach oben gerollt werden, sodass die gesamte Seitenwand des Fahrzeugs ungehindert zugänglich ist.

Um eine besonders hohe innere Laderaumhöhe zu erzielen, wird vorgeschlagen, dass der Laderaum zumindest des Anhängers relativ zu den Rädern höhenverstellbar ist. Der Abstand zwischen Laderaum und Rädern beziehungsweise zwischen Laderaum und Strasse kann beispielsweise pneumatisch oder auch hydraulisch oder mechanisch variiert werden. Dadurch kann die minimal notwendige Bodenfreiheit eingestellt werden, um bei einer Stapelung von drei IBC-Containern im Laderaum übereinander eine Höhe von etwa 4 m nicht überschreiten zu müssen. Eine derartige Höhenverstellung ist vorzugsweise nicht nur im Stand sondern auch während der Fahrt möglich, um flexibel auf Unterführungen oder Bodenunebenheiten reagieren zu können.

Eine besondere Ausführungsvariante sieht vor, dass der Lastkraftwagen eine Einrichtung zum Messen von Bodenunebenheiten und zum Anzeigen von einen einstellbaren Messwert übersteigenden Bodenunebenheiten aufweist. Der Lastkraftwagen kann mit einem Laderaum fahren, der sehr nahe an der Strasse positioniert ist. Gerade bei Bodenunebenheiten wie Wellen oder Abweichungen von einer waagerechten Fahrbahn kann es jedoch passieren, dass der Laderaum mit der Strasse in Berührung kommt und Schäden entstehen. Die vorgeschlagene Anzeige hilft dem Fahrzeugführer, derartige Bodenunebenheiten zu erkennen und anzuhalten oder die Höhe des Laderaums relativ zu den Rädern - und somit zur Strasse - zu verstellen. Als Anzeige kann ein Licht- oder Tonsignal dienen, das den Fahrzeugführer alarmiert.

Es wird weiterhin vorgeschlagen, dass die Einrichtung zum Messen von Bodenunebenheiten am Zugfahrzeug angeordnet ist. Sofern die Bodenunebenheit im Bereich des Zugfahrzeugs erkannt wird, verbleibt ein gewisser Reaktionsweg, um auf die Bodenunebenheit beispielsweise durch Anheben des Laderaums zu reagieren.

Vorteilhaft ist es, wenn die Einrichtung zum Messen von Bodenunebenheiten mit einer Einrichtung zum Verstellen der Höhe des Laderaums zumindest des Anhängers relativ zu den Rädern in Verbindung steht. Die Messeinrichtung kann somit direkt ein Anheben des Laderaums bewirken, sodass ohne Zwischenschaltung des Fahrzeugführers eine Beschädigung des Laderaums und somit des gesamten Anhängers vermieden wird.

Eine vorteilhafte Ausgestaltung sieht vor, dass die Einrichtung zum Messen von Bodenunebenheiten mit einem Navigationssystem in Verbindung steht. Dies erlaubt es die Bodenunebenheit bei einem erstmaligen Befahren der Strecke zu orten, sodass die Position der Bodenunebenheit dem Navigationssystem bekannt ist. Bei einem abermaligen Befahren der Strecke kann auf der Grundlage der vom Navigationssystem zur Verfügung gestellten Daten zum richtigen Zeitpunkt zum Beispiel auf ein Drosseln der Geschwindigkeit und ein Anheben des Laderaums hingewiesen werden.

Besonders vorteilhaft ist es, wenn das Navigationssystem mit der Einrichtung zum Verstellen der Höhe des Laderaums relativ zu den Rädern in Verbindung steht. Das Navigationssystem kann somit direkt den Abstand des Laderaums zur Strasse steuern, um bei Bodenunebenheiten durch eine derartige Einflussnahme frühzeitig eine Beschädigung des Kraftfahrzeugs zu vermeiden.

Insbesondere im Hinblick auf die im Straßenverkehr anfallenden Mautgebühren wird vorgeschlagen, dass das Gesamtgewicht des Lastkraftwagens unter 12 t liegt. Dies entspricht etwa einer Beladung von 7,5 t. Derartige leichtere Lastkraftwagen unterliegen günstigeren Mautgebühren. Auch dies führt zu einem Einsparen von Logistikkosten.

Vorteilhaft ist, wenn der Boden des Laderaums sich in Längsrichtung des Lastkraftwagens erstreckende Walzen aufweist. Dies ermöglicht es, beim Beladen des Lastkraftwagens von der Seite her, Container auf die Walzen zu stellen und quer zum Laderaum auf einfache Art und Weise zu verschieben, in dem die Container auf den sich drehenden Walzen gleiten. Zur seitlichen Beladung reicht somit ein Gabelstapler mit kürzeren Sinken, da die auf eine Seite des Laderaums gestellten Container anschließend auf den Walzen auf die andere Seite des Laderaums geschoben werden können.

Ein Ausführungsbeispiel eines erfindungsgemäßen Lastkraftwagens mit Zugfahrzeug und Anhänger ist anhand der beispielhaften Darstellung des in der Figur dargestellten Sattelschleppers erläutert. Es zeigt
- Figur 1: eine schematische Darstellung eines Sattelschleppers mit 76 IBC-Containern mit geöffneter Plane,
- Figur 2: eine schematische Darstellung eines Sattelschleppers mit 70 IBC Containern mit geöffneter Plane und
- Figur 3: den in Figur 2 gezeigten Sattelschlepper in einer Ansicht von unten.

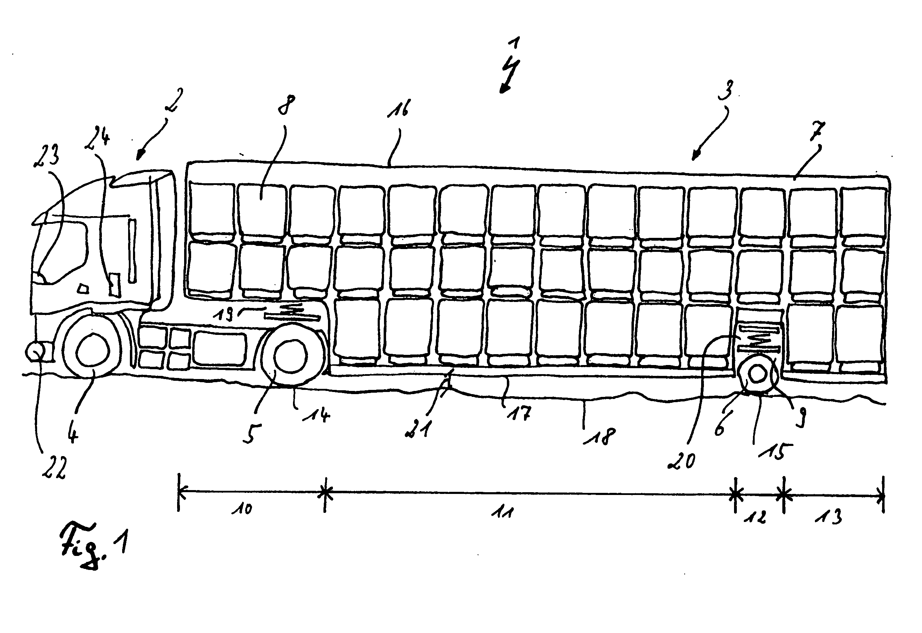

Der in der Figur 1 gezeigte Sattelschlepper 1 besteht aus dem Zugfahrzeug 2 und dem Anhänger 3. Dem Zugfahrzeug 2 sind die Radpaare 4 und 5 zugeordnet und dem Anhänger ist das Radpaar 6 zugeordnet.

Das Zugfahrzeug ist im Wesentlichen in bekannter Bauart aufgebaut. Es ist ein üblicher Sattelschlepper, der kleinere Umrüstungen hinsichtlich eines Navigationssystems und für die Verstellung der Höhe des Laderaumes erhalten hat.

Der Laderaum 7 hat eine Länge von etwas über 14 m und eine innere Laderaumhöhe von etwa 3,60 m. Dies ermöglicht es 76 IBC-Container mit Abmessungen von etwa 1 m Länge, 1,2 m Breite und 1,17 m Höhe im Laderaum anzuordnen. In Fahrtrichtung stehen jeweils zwei Container 8 nebeneinander, sodass eine Containerreihe nur 1 m der Fahrzeuglänge in Anspruch nimmt. Im Bereich der Auflage des Anhängers auf dem Zugfahrzeug sind drei Containerreihen mit jeweils zwei Containern übereinander angeordnet. Dieser Bereich des Laderaumes fasst somit zwölf Container. Im daran anschließenden Bereich bis zu den Rädern des Anhängers sind acht Containerreihen mit jeweils drei Containern übereinander und zwei Containern nebeneinander angeordnet. Dieser zweite Bereich fasst somit 48 Container. Die Räder 6 sind an diesem zweiten Bereich anschließend in einer Ausnehmung 9 angeordnet und daher können die Container über dem Räderpaar 6 nur so angeordnet werden, dass zwei Container übereinander und zwei Container nebeneinander stehen. Im bereich über der Ausnehmung 9 für das Räderpaar 6 sind somit nur 4 Container vorgesehen. Hinter der Ausnehmung 9 beginnt ein weiterer Bereich des Laderaumes 7, in dem wieder drei Container übereinander gestapelt werden können. Dieser Bereich nimmt in Längsrichtung zwei Container auf, sodass hier weitere zwölf Container angeordnet werden können.

Der Laderaum gliedert sich somit in vier Bereiche 10, 11, 12 und 13. Der erste Bereich 10 liegt oberhalb des Auflagebereiches. Hier ist die innere Laderaumhöhe so bemessen, dass zwei IBC-Container mit einer Höhe von jeweils 1,17 m übereinander gestapelt werden können. Die Erstreckung in Fahrtrichtung beträgt mehr als 3 m, sodass in Längrichtung drei Container hintereinander gestapelt werden können.

Der zweite Laderraumbereich 11 liegt zwischen dem ersten Bereich und der Ausnehmung für die Räder. Dieser Bereich hat eine innere Laderaumhöhe von über 3,51 m sodass drei IBC-Container übereinander gestapelt werden können. Seine Länge beträgt mehr als 8 m, sodass acht Container mit ihrer schmalen Seite von 1 m Länge hintereinander angeordnet werden können.

Der dritte Laderaumbereich 12 liegt oberhalb der Ausnehmung 9 für die Räder 6. Er hat eine Länge von mindestens 1 m, sodass in Längsrichtung des Fahrzeuges in diesem Bereich zwei Container nebeneinander und zwei Container übereinander angeordnet werden können.

Der letzte Laderaumbereich 13 liegt in Fahrtrichtung hinter der Ausnehmung 9 und erlaubt es hierdurch wiederum auf einer inneren Laderaumhöhe von über 3,51 m drei Container übereinander zu stapeln. Im Ausführungsbeispiel sind zwei Container hintereinander angeordnet, für die die Länge des Bereiches mehr als 2 m beträgt.

Das vorliegende Ausführungsbeispiel kann auf verschiedenste Arten variiert werden. Beispielsweise können größere Räder 6 verwendet werden. Dann muss auch die Ausnehmung 9 vergrößert werden. Somit ist oberhalb der Räder der Laderaum auf der Länge von zwei hintereinander angeordneten Containern derart verringert, dass in diesem Bereich nur zwei Container übereinander gestapelt werden können.

Je nach einzuhaltender Länge des Fahrzeuges kann es darüber hinaus sinnvoll sein, hinter den Rädern nur sechs statt zwölf Containern anzuordnen.

Wie in der Figur dargestellt ist der Ladraum von der Seite beladbar, wobei die IBC-Container so auf den Anhänger gestellt werden, dass sie in Fahrtrichtung die geringste Länge (1 m) aufweisen.

Die äußere Höhe des Anhängers sollte von der Unterseite 14 bzw. 15 der Räder bis zur Oberseite 16 der Außenseite des Laderaumes vorzugsweise etwa 4 m nicht überschreiten. Um trotzdem innerhalb des Laderaumes eine ausreichende Höhe zum Stapeln von drei IBC-Containern übereinander zu gewährleisten, kann nur ein geringer Abstand zwischen der Unterseite 17 des Laderaumes 7 und der Fahrbahn 18 eingehalten werden. Im Ausführungsbeispiel ist daher eine Einrichtung 19, 20 zum Verstellen der Höhe des Laderaumes 7 relativ zu den Rädern 5, 6 vorgesehen. Dies ermöglicht es insbesondere bei Bodenunebenheiten den Abstand 21 zur Fahrbahn 18 zu vergrößern bzw. bei sehr ebenen Fahrbahnen zu verringern.

Da häufig überraschend Bodenunebenheiten festgestellt werden, die vom Fahrer optisch schlecht erkennbar sind, ist im vorderen Bereich des Zugfahrzeuges 2 eine Einrichtung 22 zum Messen von Bodenunebenheiten und im Führerraum eine Anzeige 23 zum Anzeigen von einen einstellbaren Maximalwert übersteigenden Bodenunebenheiten vorgesehen. Die Anzeige 23 kann beispielsweise optisch oder akustisch sein, um den Fahrer darauf hinzuweisen, dass er mittels der Höhenverstelleinrichtung 19, 20 den Abstand 21 zur Fahrbahn 18 erhöhen sollte.

Der Lastkraftwagen weist weiterhin ein Navigationssystem 24 auf. Dieses Navigationssystem steht sowohl mit der Einrichtung 22 zum Messen von Bodenunebenheiten, der Einrichtung 23 zur Anzeige von Bodenunebenheiten und mit der Höhenverstelleinrichtung 19, 20 in Verbindung. Damit ist es möglich, den Ort von Bodenunebenheiten einmalig zu erfassen oder als Datensatz vorzugeben und im Navigationssystem zu speichern. Das Navigationssystem 24 kann somit frühzeitig auf Bodenunebenheiten beispielsweise mit der Anzeige 23 reagieren und sogar direkt die Einrichtung 19, 20 zum Verstellen der Höhe des Laderaumes ansteuern.

Dadurch wird es möglich, mit extrem geringem Bodenabstand 21 zu fahren und im Laderaum 7 auf großen Bereichen drei IBC-Container übereinander zu stapeln. Außerdem kann die gesetzlich vorgegebene Anhängerhöhe eingehalten werden. Schwierigkeiten in Folge von Bodenunebenheiten werden durch das Navigationssystem frühzeitig angezeigt und durch die Einrichtung 19, 20 zum Verstellen der Höhe des Laderaumes des Anhängers kann durch kurzzeitiges Erhöhen des Abstandes 21 auf Bodenunebenheiten reagiert werden.

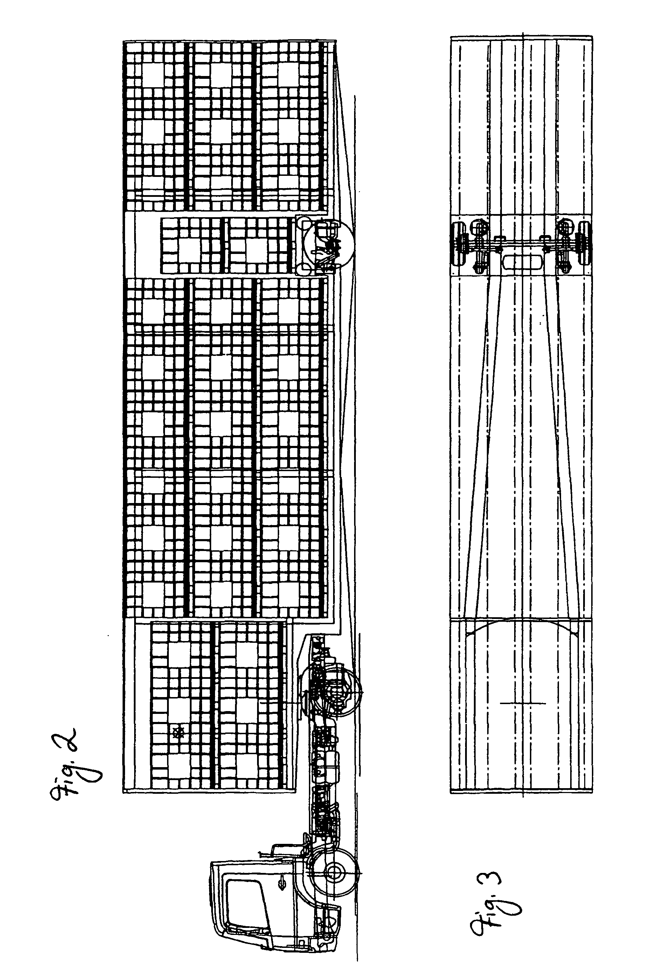

Ein alternatives Ausführungsbeispiel ist in den Figuren 2 und 3 gezeigt. Hierbei werden nur 70 IBC-Container auf dem Sattelschlepper angeordnet. Die Figuren 2 und 3 zeigen rein herstellungstechnisch ein besonders relevantes Ausführungsbeispiel, bei dem ähnlich wie beim vorangegangenen Ausführungsbeispiel 12 IBC-Container oberhalb des Sattelschleppers angeordnet sind. Im daran anschließenden Bereich sind nicht 48, sondern nur 36 IBC-Container angeordnet. Oberhalb der Achse des Sattelschleppers sind wie bei dem vorangegangen Beispiel wieder 4 IBC-Container vorgesehen und hinter der Achse sind nicht nur 12 IBC-Container wie beim vorangegangenen Ausführungsbeispiel, sondern 18 IBC-Container vorgesehen. Der Sattelschlepper fasst somit nur 70 IBC-Container. Der Abstand zwischen den Achsen ist jedoch weit geringer und damit ist die Gefahr des Aufsitzens bei Bodenunebenheiten verringert.

Die Erfindung betrifft somit einen Lastkraftwagen mit einem besonders großen Laderaum, der es ermöglicht, eine Vielzahl an IBC-Containern aufzunehmen. Ein weiter Aspekt der Erfindung betrifft die Höheverstellung des Laderaums relativ zu den Rädern, vorzugsweise in Verbindung mit einer Mess- und Anzeigeeinrichtung. Ein dritter unabhängiger Aspekt der Erfindung betrifft die Anordnung von Walzen am Boden des Laderaums, wobei alle in den Ansprüchen genannten Merkmale der Erfindung auch als unabhängige Erfindungen beanspruchten werden.

## Patentansprüche

1. Lastkraftwagen (1) mit einem Zugfahrzeug (2) und einem Anhänger (3), der als Auflieger ausgebildet ist und der Räder (6) und einen Laderaum (7) aufweist, wobei die äußere Höhe des Anhängers (3) von der Unterseite (14, 15) der Räder (5, 6) bis zur Oberseite (16) des Laderaumes (7) gemessen etwa 4 m nicht überschreitet und der Anhänger geeignet ist zum Transport von leeren Containern mit Abmessungen von 1 m Länge, 1,20 m Breite und 1,17 m Höhe, ***dadurch gekennzeichnet, dass*** der Laderaum (7) derart bemessen ist, dass er quer zur Fahrtrichtung Reihen mit zum Teil 4 und zum Teil 6 Containern und mehr als 64 Container (8) aufnehmen kann, wobei quer zur Fahrtrichtung jeweils 2 Container (8) so nebeneinander stehen können, dass eine Containerreihe nur 1 m der Fahrzeuglänge in Anspruch nimmt, wobei im Bereich der Auflage des Anhängers auf dem Zugfahrzeug 3 Reihen mit 4 Containern (8) angeordnet sein können, der Laderaum (7) eine Ausnehmung (9) zur Aufnahme der Räder (6) aufweist, über den Rädern (6) 1 bis 2 Reihen mit 4 Containern angeordnet sein können, im Bereich zwischen der Auflage und den Rädern des Anhängers Reihen mit 6 Containern angeordnet sein können und hinter den Rädern 2 bis 3 Reihen mit 6 Containern (8) angeordnet sein können.

2. Lastkraftwagen nach Anspruch 1, ***dadurch gekennzeichnet, dass*** hinter den Rädern 3 Reihen mit 6 Containern angeordnet sein können.

3. Lastkraftwagen nach Anspruch 2, ***dadurch gekennzeichnet, dass*** im Bereich zwischen der Auflage und den Rädern des Anhängers 6 Reihen mit 6 Containern angeordnet sein können.

4. Lastkraftwagen nach einem der vorhergehenden Ansprüche, ***dadurch gekennzeichnet, dass*** die Ausnehmung (9) in Fahrtrichtung eine Länge von 1,3 m, vorzugsweise 1,1 m, nicht überschreitet.

5. Lastkraftwagen nach einem der vorhergehenden Ansprüche, ***dadurch gekennzeichnet, dass*** der Anhänger (3) in Fahrtrichtung vor der Ausnehmung (9) auf einer Länge von mindestens 6 m, vorzugsweise mindestens 7 m, eine innere Laderaumhöhe von über 3,51 m aufweist.

6. Lastkraftwagen nach einem der vorhergehenden Ansprüche, ***dadurch gekennzeichnet, dass*** der Anhänger (3) in Fahrtrichtung hinter der Ausnehmung (9) eine innere Laderaumhöhe von über 3,51 m aufweist.

7. Lastkraftwagen nach einem der vorhergehenden Ansprüche, ***dadurch gekennzeichnet, dass*** der Laderaum (7) zumindest des Anhängers (3) in Fahrtrichtung von der Seite beladbar ist.

8. Lastkraftwagen nach einem der vorhergehenden Ansprüche, ***dadurch gekennzeichnet, dass*** der Laderaum (7) zumindest des Anhängers (3) relativ zu den Rädern (5, 6) höhenverstellbar ist.

9. Lastkraftwagen nach einem der vorhergehenden Ansprüche, ***dadurch gekennzeichnet, dass*** er eine Einrichtung (22) zum Messen von Bodenunebenheiten und zur Anzeige (23) von einen einstellbaren Maximalwert übersteigenden Bodenunebenheiten aufweist.

10. Lastkraftwagen nach Anspruch 10, ***dadurch gekennzeichnet, dass*** die Einrichtung (22) zum Messen von Bodenunebenheiten am Zugfahrzeug (2) angeordnet ist.

11. Lastkraftwagen nach einem der vorhergehenden Ansprüche, ***dadurch gekennzeichnet, dass*** eine Einrichtung (22) zum Messen von Bodenunebenheiten mit einer Einrichtung (19, 20) zum Verstellen der Höhe des Laderaumes (7) zumindest des Anhängers (3) relativ zu den Rädern (5, 6) in Verbindung steht.

12. Lastkraftwagen nach einem der vorhergehenden Ansprüche, ***dadurch gekennzeichnet, dass*** eine Einrichtung (22) zum Messen von Bodenunebenheiten mit einem Navigationssystem (24) in Verbindung steht.

13. Lastkraftwagen nach einem der vorhergehenden Ansprüche, ***dadurch gekennzeichnet, dass*** ein Navigationssystem (24) mit einer Einrichtung (19, 20) zum Verstellen der Höhe des Laderaumes (7) relativ zu den Rädern (5, 6) in Verbindung steht.

14. Lastkraftwagen nach einem der vorhergehenden Ansprüche, ***dadurch gekennzeichnet, dass*** sein Gesamtgewicht unter 12 t liegt.

15. Lastkraftwagen nach einem der vorhergehenden Ansprüche, ***dadurch gekennzeichnet, dass*** der Boden des Laderaums sich in Längsrichtung des Lastkraftwagens erstreckende Walzen aufweist.

## Claims

1. Large goods vehicle (1) with a tractive unit (2) and a trailer (3) which is configured as a semi-trailer and which has wheels (6) and a cargo space (7), the external height of the trailer (3) measured from the underside (14, 15) of the wheels (5,6) to the upper side (16) of the cargo space (7) not exceeding approximately 4 m and the trailer being adapted for transport of empty containers with measurements of 1m in length, 1,20 m in width and 1,17 m in height, **characterized in that** the cargo space (7) is dimensioned in such a manner that, transversely to the direction of motion, it can hold rows of partly 4 and partly 6 containers and more than 64 containers (8), in which respectively 2 containers (8) can stand next to each other transversely to the direction of motion in such a manner that a row of containers occupies only 1 m of the length of the vehicle, in which 3 rows of 4 containers (8) can be disposed in the area of the rest of the trailer on the tractive unit, the cargo space (7) has a recess (9) for receiving the wheels (6), 1 to 2 rows of 4 containers can stand above the wheels (6), rows of 6 containers can be disposed in the area between the rest and the wheels of the trailer and 2 to 3 rows of 6 containers (8) can be disposed behind the wheels.

2. The large goods vehicle according to claim 1, **characterized in that** 3 rows of 6 containers can be disposed behind the wheels.

3. The large goods vehicle according to claim 2, **characterized in that** 6 rows of 6 containers can be disposed in the area between the rest and the wheels of the trailer.

4. The large goods vehicle according to one of the afore-mentioned claims, **characterized in that** the recess (9) does not exceed a length of 1,3 m, preferably 1,1 m, in the direction of motion.

5. The large goods vehicle according to one of the afore-mentioned claims, **characterized in that** the trailer (3) has an internal cargo space height of more than 3,51 m along a length of at least 6 m, preferably at least 7 m in front of the recess (9) in the direction of motion.

6. The large goods vehicle according to one of the afore-mentioned claims, **characterized in that** the trailer (3) has an internal cargo space height of more than 3,51 m behind the recess (9) in the direction of motion.

7. The large goods vehicle according to one of the afore-mentioned claims, **characterized in that** the cargo space (7) at least of the trailer (3) can be loaded from the side in the direction of motion.

8. The large goods vehicle according to one of the afore-mentioned claims, **characterized in that** the cargo space (7) at least of the trailer (3) can be adjustable in height relative to the wheels (5, 6).

9. The large goods vehicle according to one of the afore-mentioned claims, **characterized in that** it has a device (22) for measuring ground unevenness and for displaying (23) ground unevenness exceeding and adjustable maximum value.

10. The large goods vehicle according to claim 10, **characterized in that** the device (22) for measuring ground unevenness is disposed on the tractive unit (2).

11. The large goods vehicle according to one of the afore-mentioned claims, **characterized in that** a device (22) for measuring ground unevenness is connected to a device (19, 20) for adjusting the height of the cargo space (7) at least of the trailer (3) relative to the wheels (5, 6).

12. The large goods vehicle according to one of the afore-mentioned claims, **characterized in that** a device (22) for measuring ground evenness is connected to a navigation system (24).

13. The large goods vehicle according to one of the afore-mentioned claims, **characterized in that** a navigation system (24) is connected to a device (19, 20) for adjusting the height of the cargo space (7) relative to the wheels (5, 6).

14. The large goods vehicle according to one of the afore-mentioned claims, **characterized in that** its total weight is less than 12 t.

15. The large goods vehicle according to one of the afore-mentioned claims, **characterized in that** the floor of the cargo space has rolls extending in the longitudinal direction of the large good

## Revendications

1. Un camion (1) avec un tracteur (2) et une remorque (3) qui est configuré en semi-remorque et qui comporte des roues (6) et un espace de chargement (7), la hauteur extérieure de la remorque (3), mesurée entre le dessous (14, 15) des roues (5, 6) et le dessus (16) de l'espace de chargement (7) ne dépassant pas environ 4 m et la remorque étant adaptée au transport de conteneurs vides mesurant 1 m de long, 1,20 m de large et 1,17 de haut, **caractérisé en ce que** l'espace de chargement (7) est dimensionné de telle manière qu'il peut accueillir, perpendiculairement au sens de la marche, des rangées en partie de 4 et en partie de 6 conteneurs et plus de 64 conteneurs (8), respectivement 2 conteneurs (8) pouvant être positionnés l'un à côté de l'autre dans le sens de la marche de telle manière qu'une rangée de conteneurs n'occupe qu' 1 m de la longueur du véhicule, 3 rangées de 4 conteneurs (8) pouvant être disposées dans la zone de la surface d'appui de la remorque sur le tracteur, l'espace de chargement (7) comportant un évidement (9) pour recevoir les roues (6), 1 à 2 rangées de 4 conteneurs pouvant être disposées au-dessus des roues (6), des rangées de 6 conteneurs pouvant être disposées dans la zone entre la surface d'appui et les roues de la remorque et 2 à 3 rangées de 6 conteneurs (8) pouvant être disposées derrière les roues.

2. Le camion selon la revendication 1, **caractérisé en ce que** 3 rangées de 6 conteneurs peuvent être disposé derrière les roues.

3. Le camion selon la revendication 2, **caractérisé en ce que** 6 rangées de 6 conteneurs peuvent être disposées dans la zone entre la surface d'appui et les roues de la remorque.

4. Le camion selon l'une quelconque des revendications précédentes, **caractérisé en ce que** l'évidement (9) n'excède pas une longueur de 1,3 m, de préférence 1,1 m dans le sens de la marche.

5. Le camion selon l'une quelconque des revendications précédentes, **caractérisé en ce que** la remorque (3) comporte sur une longueur d'au moins 6 m, de préférence d'au moins 7 m devant l'évidement (9) dans le sens de la marche, une hauteur intérieure de l'espace de chargement de plus de 3,51 m.

6. Le camion selon l'une quelconque des revendications précédentes, **caractérisé en ce que** la remorque (3) comporte derrière l'évidement (9) dans le sens de la marche, une hauteur intérieure de l'espace de chargement de plus de 3,51 m.

7. Le camion selon l'une quelconque des revendications précédentes, **caractérisé en ce que** l'espace de chargement (7) du moins de la remorque (3) peut être chargé par le côté dans le sens de la marche.

8. Le camion selon l'une quelconque des revendications précédentes, **caractérisé en ce que** l'espace de chargement (7) du moins de la remorque (3) est réglable en hauteur par rapport aux roues (5, 6).

9. Le camion selon l'une quelconque des revendications précédentes, **caractérisé en ce qu'**il comporte un dispositif (22) pour mesurer des inégalités du sol et pour l'affichage (23) d'inégalités du sol dépassant une valeur maximale réglable.

10. Le camion selon la revendication 10, **caractérisé en ce que** le dispositif (22) pour mesurer des inégalités du sol est disposé sur le tracteur (2).

11. Le camion selon l'une quelconque des revendications précédentes, **caractérisé en ce qu'**un dispositif (22) pour mesurer des inégalités du sol est connecté à un dispositif (19, 20) pour régler la hauteur de l'espace de chargement (7) du moins de la remorque (3) par rapport aux roues (5, 6).

12. Le camion selon l'une quelconque des revendications précédentes, **caractérisé en ce qu'**un dispositif (22) pour mesurer des inégalités du sol est connecté à un système de navigation (24).

13. Le camion selon l'une quelconque des revendications précédentes, **caractérisé en ce qu'**un système de navigation (24) est connecté à un dispositif (19, 20) pour régler la hauteur de l'espace de chargement (7) par rapport aux roues (5, 6).

14. Le camion selon l'une quelconque des revendications précédentes, **caractérisé en ce que** son poids total est inférieur à 12t.

15. Le camion selon l'une quelconque des revendications précédentes, **caractérisé en ce que** le sol de l'espace de chargement comporte des rouleaux s'étendant dans la direction longitudinale du camion.
